# EUROPÄISCHE PATENTSCHRIFT

(11) **EP 2 367 710 B1**
(45) Veröffentlichungstag und Bekanntmachung des Hinweises auf die Patenterteilung: **05.10.2016**
(21) Anmeldenummer: 09784047.4
(22) Anmeldetag: 16.10.2009
(51) Int. Cl.: B60T 8/40

(54) **BREMSSYSTEM FÜR EIN KRAFTFAHRZEUG SOWIE KRAFTFAHRZEUG MIT EINEM DERARTIGEN BREMSSYSTEM**
BRAKE SYSTEM FOR A MOTOR VEHICLE AND MOTOR VEHICLE COMPRISING A BRAKE SYSTEM OF SAID KIND
SYSTÈME DE FREINAGE POUR UN VÉHICULE AUTOMOBILE AINSI QUE VÉHICULE AUTOMOBILE ÉQUIPÉ D'UN TEL SYSTÈME DE FREINAGE

(30) Priorität: 24.11.2008 DE 102008044002
(43) Veröffentlichungstag der Anmeldung: 28.09.2011
(73) Patentinhaber: Robert Bosch GmbH, 70442 Stuttgart (DE)
(72) Erfinder: KUNZ, Michael, 71711 Steinheim An Der Murr (DE); LEIBLEIN, Matthias, 70839 Gerlingen (DE); QUIRANT, Werner, 71717 Beilstein (DE); KOLARSKY, Jens, 74321 Bietigheim/Bissingen (DE)
(86) Internationale Anmeldenummer: PCT/EP2009/063576
(87) Internationale Veröffentlichungsnummer: WO 2010/057730

(56) Entgegenhaltungen:
- EP-A- 1 078 833
- EP-A- 1 738 983
- DE-A1- 10 238 278
- DE-A1- 19 703 776

## Beschreibung

Die Erfindung betrifft ein Bremssystem für ein Kraftfahrzeug, mit einem wenigstens einkreisigen Bremszylinder, mittels welchem bei einer Betätigung eine Bremskraft auf mindestens ein Rad des Kraftfahrzeugs aufprägbar ist. Die Erfindung betrifft ferner ein Kraftfahrzeug mit einem Bremssystem.

### Stand der Technik

Bremssysteme der eingangs genannten Art sind aus dem Stand der Technik bekannt. Beispielsweise beschreibt die DE 10 2005 039 314 A1 ein Verfahren sowie eine Vorrichtung zur Rekuperation von Energie bei einem Bremsvorgang eines Hybrid-Fahrzeugs. Zu diesem Zweck ist eine Bremsanlage vorgesehen, die über ein Bremspedal, einen Bremskraftverstärker mit einem Bremszylinder, auf dem ein Bremsflüssigkeitsbehälter angeordnet ist, vorgesehen. Der Bremskraftverstärker verstärkt die vom Fahrer am Bremspedal ausgeübte Bremskraft und erzeugt einen Bremsdruck, der über Bremsleitungen zu Radbremsen geleitet wird. Die beschriebene Vorrichtung trägt dem besonderen Merkmal von Hybridfahrzeugen, nämlich die Rückgewinnung der Bremsenergie durch rekuperatives Bremsen, Rechnung. Dabei wird ein Elektromotor, in der Regel der elektrische Antriebsmotor des Kraftfahrzeugs, generatorisch betrieben. Die dadurch erzeugte elektrische Energie wird in einen Energiespeicher eingespeist. Die dort gespeicherte Energie kann bei Bedarf wieder abgerufen werden, beispielsweise zum Betrieb des Antriebsmotors und/oder für ein Bordnetz des Kraftfahrzeugs. Durch die Rekuperation wird die Verlustleistung des Kraftfahrzeugs beim Bremsen verringert. Sie ist daher eine Maßnahme zur Verbrauchs- und Emissionsverringerung. Das rekuperative Bremsen stellt hohe Anforderungen an das konventionelle, auf Reibung basierende Bremssystem des Kraftfahrzeugs, da die Bremswirkung durch Rekuperation von mehreren Faktoren abhängig ist. Zunächst steht die rekuperative Bremse bei vollem (elektrischem) Energiespeicher nicht zur Verfügung. Das bedeutet, dass in diesem Fall das gesamte Bremsmoment über die konventionelle Bremse, also beispielsweise Reibungsbremsen an den Rädern, aufgebracht werden muss. Weiterhin ermöglicht das rekuperative Bremssystem keine Bremsmomente bis zum Stillstand des Kraftfahrzeugs mittels des generatorisch betriebenen Elektromotors. Bei Anhaltevorgängen des Kraftfahrzeugs muss daher das konventionelle Bremssystem im niedrigen Geschwindigkeitsbereich die wegfallende Bremswirkung der rekuperativen Bremse durch ein höheres Bremsmoment kompensieren. Es gibt auch Betriebszustände, bei denen die hydraulische Bremskraft zurückgenommen werden muss, um einen hohen Rekuperationsgrad zu erzielen. Beispielsweise wird nach Schaltvorgängen der abgekuppelte Generator als rekuperative Bremse durch Einkuppeln eingeblendet, um die Bremswirkung wieder in Richtung rekuperativer Bremse zu verschieben. Um das Gesamtbremsmoment - das von konventionellem und rekuperativem Bremssystem gemeinsam erzeugt wird - konstant zu halten, muss daher der Anteil der konventionellen Reibungsbremse reduziert werden. Die beiden vorstehend erläuterten Vorgänge werden als "Verblenden" bezeichnet. Bei der Auslegung des Bremssystems muss auch stets die Prämisse beachtet werden, dass das Verwenden des rekuperativen Bremssystems keine Auswirkung auf den Bremsweg haben darf.

Bei einfachen Bremssystemen muss ein Fahrer des Kraftfahrzeugs die Aufgabe des Verzögerungsreglers übernehmen. Er muss also das Bremsmoment beispielsweise bei vollem Energiespeicher und/oder niedrigen Geschwindigkeiten manuell korrigieren. Er muss bei entfallendem oder hinzukommenden rekuperativen Bremsmoment das konventionelle Bremssystem über das Pedal so anpassen, dass die gewünschte Verzögerung erzielt wird. Die erforderlichen Pedalmodulationen sind, insbesondere bei geringen rekuperativen Bremsmomenten, zumutbar, aus Komfortsicht jedoch nicht optimal. Da nahezu kein zusätzlicher Aufwand gegenüber konventionellen Bremssystemen für ein solches Bremssystem erforderlich ist, ist diese Lösung aus Kostensicht optimal. Sind höhere Anforderungen zu erfüllen, so kommen beispielsweise Brake-by-Wire Bremssysteme (zum Beispiel EHB-Systeme) zum Einsatz. Diese nehmen eine Entkopplung des Bremspedals von dem übrigen Bremssystem vor. Durch diese Entkopplung kann das Verblenden der Bremsmomente des konventionellen und des rekuperativen Bremssystems nahezu beliebig erfolgen, während die Verblendvorgänge vom

Fahrer unbemerkt durchgeführt werden können. Diese Lösung stellt hinsichtlich des Komforts eine optimale Lösung dar, ist jedoch auch sehr kostenintensiv.

Die Offenlegungsschrift EP 1 738 983 A2 offenbart eine By-Wire Bremsbetätigungsvorrichtung zur Betätigung einer Kraftfahrzeugbremsanlage mit einem mittels eines Bremspedals mechanisch beaufschlagbaren Simulator, wobei der Simulator wenigstens ein Betätigungssensor aufweist und ein Ausgangssignal des Betätigungssensors einer Elektronikeinheit zugeführt wird, welche in Abhängigkeit von diesem Signal einen Bremskraftverstärker als Druckquelle ansteuert, dem ein Hauptbremszylinder nachgeschaltet ist, der mit Radbremsen des Fahrzeugs verbindbar ist, wobei der Bremskraftverstärker in einer Rückfallebene über ein erstes Betätigungsbauteil, wie insbesondere das Bremspedal oder ein an dem Bremspedal angelenktes Bauteil und ein im Kraftfluss nachgeschaltetes zweites Betätigungsbauteil mechanisch ansteuerbar ist.

Die EP 1 078 833 A2 betrifft eine Bremsanlage, die in drei Betriebsarten betrieben werden kann, einer muskelkraftbetriebenen, unverstärkten Betriebsart, einer Hydraulikverstärker-Betriebsart und einer elektronisch geregelten Betriebsart, wobei die Bremsanlage einen Hauptzylinder aufweist, einen ersten Kolben, der mit einem Bremspedal gekoppelt ist, einen zweiten Kolben, der den Hauptzylinder betätigt und einen dritten Kolben, der vom ersten Kolben betätigbar ist, wobei zwischen dem ersten und dem dritten Kolben mindestens ein elastisches Element vorgesehen ist und alle drei Kolben in einem Gehäuse angeordnet sind.

Die DE 10238278A1 offenbart ein elektronisches Bremssystem bei dem ein Bremspedal durch einen Fahrer entsprechend einer erforderlichen Bremskraft betätigt wird und bei dem Radzylinder an verschiedenen Fahrzeugrädern vorgesehen sinddie Bremskräfte an den jeweiligen Fahrzeugrädern erzeugen. Ein Hauptzylinder bringt einen Bremsfluiddruck zum Erzeugen der verschiedenen Radzylinderdrücke auf. Ein Pedalbetätigungsbetragserfassungsabschnitt erfasst einen Hubbetrag des Bremspedals. Das Bremspedal und der Hauptzylinder sind voneinander isoliert. Der Motor wird auf der Grundlage des durch den Pedalbetätigungsbetragserfassungsabschnitt erfassten Pedalbetätigungsbetrags angetrieben und steuert dann den Bremsfluiddruck.

Dokument DE 197 03 776 offenbart einen Bremsdruckgeber für eine hydraulische Kraftfahrzeugbremsanlage mit Bremskraftverstärkung, bei der die vom Fahrer aufgebrachte Pedalkraft auf einen Verstärkerkolben übertragbar ist,
der zusätzlich durch den Druck einer Verstärkerpumpe beaufschlagbar ist. Die am Verstärkerkolben wirksam werdende Kraft wird auf den Druckkreiskolben eines mit den Radbremsen des Fahrzeugs verbundenen Hauptzylinders übertragen. Der von der Verstärkerpumpe in der Verstärkerkammer aufbaubare Druck ist durch ein Drucksteuerventil steuerbar.

### Offenbarung der Erfindung

Demgegenüber weist das Bremssystem mit den im Anspruch 1 genannten Merkmalen den Vorteil auf, dass es sehr kostengünstig realisiert werden kann, jedoch gleichzeitig sehr hohe Rekuperationsgrade ermöglicht. Auch können Komponenten aus konventionellen Bremssystemen übernommen werden. Dies wird erfindungsgemäß erreicht, indem der Bremszylinder mechanisch mit einem von einem Bremsvorgabeerfassungsmittel entkoppelten Verstärkerzylinder wirkverbunden ist, der hydraulisch zur Betätigung des Bremszylinders entsprechend eines mittels des Bremsvorgabeerfassungsmittels erfassten Fahrerwunsches ansteuerbar ist. Der Bremszylinder des Bremssystems ist dabei wenigstens einkreisig. Es kann somit vorgesehen sein, dass die Bremskraft auf ein oder mehrere Räder des Kraftfahrzeugs mittels des Bremszylinders aufprägbar ist. Es kann auch ein mehrkreisiger Bremszylinder vorgesehen sein, wobei beispielsweise jeweils ein Kreis einer Vorderachse und einer Hinterachse des Kraftfahrzeugs oder jeweils ein Kreis jeweils einem Vorderrad und einem Hinterrad zugeordnet ist. Der Bremszylinder stellt dabei den Bremsdruck für das Rad beziehungsweise die Räder zur Verfügung. In dem Bremszylinder befindet sich also mindestens ein Kolben, über welchen der Bremsdruck erzeugbar ist. Zu diesem Zweck ist der Bremszylinder beziehungsweise ein darin angeordneter Kolben mechanisch mit dem Verstärkerzylinder wirkverbunden. Das bedeutet, dass der Kolben des Bremszylinders mit einem Kolben des Verstärkerzylinders verbunden ist. Gleichzeitig ist der Bremszylinder mechanisch von dem Bremsvorgabeerfassungsmittel entkoppelt. Das Bremsvorgabeerfassungsmittel kann beispielsweise das Bremspedal des Kraftfahrzeugs umfassen oder mit diesem verbunden sein. Der Bremszylinder wird also nicht direkt von dem Bremsvorgabeerfassungsmittel beaufschlagt. Es kann ebenso vorgesehen sein, dass keine unmittelbare Verbindung zwischen dem Bremsvorgabeerfassungsmittel und dem Verstärkerzylinder vorhanden ist. Der Verstärkerzylinder wird vielmehr hydraulisch angesteuert. Dies geschieht entsprechend des Fahrerwunsches, der mittels des Bremsvorgabeerfassungsmittels erfassbar ist. Dabei können weitere Bremsmomente, die beispielsweise durch einen Generator aufgebracht werden, im hydraulischen Bremsdruck berücksichtigt werden. In dem erfindungsgemäßen Bremssystem können wesentliche Komponenten aus einem konventionellen Bremssystem, wie es aus dem Stand der Technik bekannt ist, übernommen werden. Diese Komponenten können beispielsweise der Bremszylinder oder auch ein ESP- und/oder ABS-Aggregat sein. Durch den Aufbau des erfindungsgemäßen Bremssystems kann der Fahrer des Kraftfahrzeugs vollständig von dem Bremssystem entkoppelt sein, das heißt, es liegt keinerlei mechanische Rückmeldung des Bremssystems über das Bremsvorgabeerfassungsmittel vor. Eine solche Rückmeldung ist jedoch einfach realisierbar, wie nachstehend noch beschrieben werden soll. Das beschriebene Bremssystem kann nicht nur in Kraftfahrzeugen mit Hybrid-Antrieb, sondern auch mit konventionellem Antrieb vorgesehen sein. Es bietet dabei verschiedene Vorteile. Zunächst können alle vollaktiven Druckaufbauten der bekannten Bremssysteme mit höchster Druckdynamik und Druckstellgenauigkeit nahezu lautlos dargestellt werden. Ebenso sind Komfortfunktionen, wie zum Beispiel Verzögerungsregelung für ACC (Adaptive Cruise Control)-Systeme, auch bis zum Stillstand des Kraftfahrzeugs sehr gut darstellbar. Dabei sind durch die Entkopplung des Fahrers keinerlei Rückwirkungen über das Bremsvorgabeerfassungsmittel, beispielsweise das Bremspedal umfassend, spürbar. Wird der zur Betätigung des Verstärkerzylinders nötige Bremsdruck zeitlich entkoppelt aufgebaut, beispielsweise durch Zwischenspeicherung des durch eine Pumpe erzeugten Bremsdrucks in einem Druckspeicher, so kann die Betätigung des Bremssystems beziehungsweise eine Verzögerungsregelung lautlos erfolgen. Die mit dem erfindungsgemäßen Bremssystem erzielbare Dynamik erfüllt höchste Anforderungen für alle ACCverwandten Funktionen, beispielsweise ACC Stop and Go, Parkassistent und weitere. Da Kraftfahrzeuge mit Hybrid-Antrieb oft nur einen kleinen Teil einer Fahrzeugplattform darstellen, ist eine weitgehende Kompatibilität zwischen dem Bremssystem des Kraftfahrzeugs mit dem konventionellen Antrieb und dem der Hybridvariante vorteilhaft.

Die Erfindung sieht vor, dass das Bremsvorgabeerfassungsmittel ein mit einem Bremspedal wirkverbundener Sensierungszylinder ist. Der Fahrer des Kraftfahrzeugs hat somit die Möglichkeit, seinen Bremswunsch über das Bremspedal dem Bremssystem zu signalisieren. Die Auslenkung des Bremspedals kann mittels des Sensierungszylinders festgestellt werden.

Erfindungsgemäß ist vorgesehen, dass der Sensierungszylinder zur Rückgabe einer mittels einer Bremskraftsimulationseinheit erzeugten Bremskraftinformation an den Fahrer vorgesehen ist. Unabhängig davon, ob die Auslenkung des Bremspedals mittels des Sensierungszylinders oder der Wegsensorik erfasst wird, kann der Sensierungszylinder die Bremskraftinformation an den Fahrer zurückgeben. Auf diese Weise kann eine zuverlässige und eindeutige Rückgabe an den Fahrer erfolgen. Diese Information kann beispielsweise proportional zu dem tatsächlich auf das Rad des Kraftfahrzeugs aufgeprägten Bremsmoment beziehungsweise der Bremskraft sein oder dabei einer beliebigen Funktionsverteilung folgen. Zum Erzeugen der Bremskraftinformation, die mittels des Sensierungszylinder an den Fahrer weitergeben wird, ist die Bremskraftsimulationseinheit vorgesehen. Diese erzeugt beispielsweise einen Druck beziehungsweise stellt einen Widerstand dar, der mittels des Sensierungszylinders an das Bremsvorgabeerfassungsmittel geleitet wird und somit dem Fahrer die Bremskraftinformation zur Verfügung stellt. Ebenso kann jedoch vorgesehen sein, dass die Bremskraftsimulationseinheit direkt das Bremsvorgabeerfassungsmittel beeinflusst, beispielsweise über einen Stellkreis.

Die erfindungsgemäße Bremskraftsimulationseinheit ist ein durch eine Feder beaufschlagter Bremskraftsimulationszylinder.

Der Bremskraftsimulationszylinder dient zur Darstellung der gewünschten Charakteristik des Bremsvorgabeerfassungsmittels, beispielsweise eines Pedalwegs und/oder einer Pedalkraft. Beispielsweise kann bei Betätigung des Sensierungszylinders Volumen aus diesem in den Bremskraftsimulationszylinder verlagert werden. Dieses wirkt dort der Federkraft entgegen, womit eine Rückmeldung über den Sensierungszylinder - durch den sich in diesem aufbauende Druck - an den Fahrer des Kraftfahrzeugs weitergeben wird. Der Bremskraftsimulationszylinder kann auch auf andere Weise beaufschlagt werden, beispielsweise mittels eines Ventils, welchen den Druck in dem Bremskraftsimulationszylinder steuernd beziehungsweise regelnd einstellt. Es kann also lediglich eine beispielsweise durch Hydraulikdruck hervorgerufene Federwirkung des Bremskraftsimulationszylinders vorliegen.

Erfindungsgemäß ist der Bremskraftsimulationszylinder an eine Verbindungsleitung angeschlossen, die über ein Verbindungsventil eine Fluidverbindung zwischen dem Verstärkerzylinder und dem Sensierungszylinder herstellt.

Alternativ und nicht erfindungsgemäß kann das Bremsvorgabeerfassungsmittel auch eine die Auslenkung des Bremspedals sensierende Wegsensorik sein.

Eine Weiterbildung der Erfindung sieht ein Hydrauliksystem vor, das zur Ansteuerung des Verstärkerzylinders vorgesehen ist. Die hydraulische Ansteuerung des Verstärkerzylinders erfolgt also durch das Hydrauliksystem, in welchem beziehungsweise mittels welchem ein Bremsdruck aufbaubar ist.

Eine Weiterbildung der Erfindung sieht vor, dass das Hydrauliksystem eine Pumpe zur Erzeugung eines Drucks und/oder einen Druckspeicher zur Speicherung des Drucks und/oder einen Drucksensor zur Bestimmung des Drucks aufweist. Das zur Ansteuerung des Verstärkerzylinders vorgesehene Hydrauliksystem weist also eine Pumpe, beispielsweise Hydraulikpumpe, auf, die den Bremsdruck in dem System erzeugt. Der erzeugte Druck kann in dem Druckspeicher zwischengespeichert werden, bis er zur Betätigung des Verstärkerzylinders benötigt wird. Auf diese Weise kann eine zeitliche Entkopplung von Erzeugung des Drucks und Ansteuern des Verstärkerzylinders erfolgen. Damit kann das Bremssystem sehr leise, vorzugsweise nahezu lautlos, arbeiten, da bei einem Bremswunsch des Fahrers der Druck aus dem Druckspeicher zum Ansteuern des Verstärkerzylinders und damit zur Betätigung des Bremszylinders verwendet werden kann. Vorzugsweise ist weiterhin der Drucksensor vorgesehen, mittels welchem der von der Pumpe erzeugte Druck und/oder der Druck in dem Druckspeicher sensierbar ist. Aufgrund von Daten des Drucksensors kann somit eine Steuerung und/oder Regelung der Pumpe beziehungsweise des Druckspeichers erfolgen. Beispielsweise kann der Druck in dem Hydrauliksystem stets konstant gehalten werden, zumindest während kein Ansteuern des Verstärkerzylinders erfolgt.

Eine Weiterbildung der Erfindung sieht vor, dass zwischen der Pumpe und/oder dem Druckspeicher und dem Verstärkerzylinder ein Druckaufbauventil, welches zum Aufbau von Druck in dem Verstärkerzylinder schaltbar ist, vorgesehen ist. Der von der Pumpe erzeugte oder in dem Druckspeicher gespeicherte Druck kann mittels des Druckaufbauventils gezielt an den Verstärkerzylinder weitergeleitet werden. Wenn das Druckaufbauventil geschaltet ist, kann Fluid in den Verstärkerzylinder gelangen beziehungsweise sich der Druck dort aufbauen. Bei nicht geschaltetem Druckaufbauventil ist der Verstärkerzylinder somit von der Pumpe und/oder dem Druckspeicher entkoppelt, womit sich der Druck in dem Verstärkerzylinder nicht weiter aufbauen kann und damit konstant bleibt und/oder abnimmt. Bei geschaltetem Druckaufbauventil wird also über den Verstärkerzylinder der Bremszylinder betätigt und somit die Bremskraft auf das mindestens eine Rad des Kraftfahrzeugs aufgeprägt. Besonders vorteilhaft ist das Druckaufbauventil zusammen mit dem Druckspeicher einsetzbar, da auf diese Weise ein Abschalten der Pumpe ermöglicht wird, solange der Druck in dem Druckspeicher ausreichend ist.

Eine Weiterbildung der Erfindung sieht vor, dass ein zum Druckabbau in dem Verstärkerzylinder schaltbares Druckabbauventil vorgesehen ist. Analog zu dem

Druckaufbauventil, mittels welchem der Druck in dem Verstärkerzylinder aufbaubar ist, ist der Druck mittels des Druckabbauventils abbaubar. Wird das Druckabbauventil geschaltet, so verringert sich somit die auf das mindestens eine Rad des Kraftfahrzeugs aufgeprägte Bremskraft. Über das Druckabbauventil kann somit der Hydraulikdruck in dem Verstärkerzylinder abgebaut werden, das Fluid also aus diesem herausgelangen. Das verwendete Hydraulikmedium wird dabei vorteilhafterweise einem Speicher (Druckausgleich) und/oder der Pumpe zugeführt.

Eine Weiterbildung der Erfindung sieht vor, dass die Bremskraftsimulationseinheit über ein Deaktivierungsventil zum Feststellen der Bremskraftsimulationseinheit verfügt. Mittels des Deaktivierungsventils kann verhindert werden, dass die Bremskraftsimulationseinheit die Bremskraftinformation erzeugt. Beispielsweise kann der Bremskraftsimulationszylinder festgestellt werden. Dabei kann kein weiteres Fluid aus dem Sensierungszylinder in den Bremskraftsimulationszylinder beziehungsweise aus diesem heraus gelangen. Damit die Bremskraftsimulationseinheit die gewünschte Charakteristik (Pedalkraft und/oder Pedalweg) darstellen kann, muss das Deaktivierungsventil nicht betätigt sein, die Bremskraftsimulationseinheit also nicht feststellen. Beispielsweise kann das Deaktivierungsventil bei erkanntem Bremswunsch geöffnet werden, das heißt nicht betätigt sein, oder alternativ auch dauerhaft nach geschalteter Zündung des Kraftfahrzeugs geöffnet sein. Auch andere Strategien sind vorstellbar. Das Deaktivierungsventil dient zur Verbesserung des Volumenhaushalts (und damit insbesondere der Verbesserung der Bremskraftinformation für den Fahrer), sollte das Bremssystem ausfallen, da dann kein (Brems-) Fluid in die Bremskraftsimulationseinheit gelangen kann. Es ist also Vorsorge zu tragen, dass das Deaktivierungsventil bei einem Fehler in dem Bremssystem oder bei einem Ausfall desselben die Bremskraftsimulationseinheit feststellt. Eine Stromlosposition des Deaktivierungsventils ist entsprechend vorzusehen.

Eine Weiterbildung der Erfindung sieht vor, dass das Deaktivierungsventil unmittelbar oder über die Bremskraftsimulationseinheit mit dem Sensierungszylinder wirkverbunden ist. Das Deaktivierungsventil kann somit zwischen dem Sensierungszylinder und der Bremskraftsimulationseinheit vorgesehen sein. Alternativ ist es auch möglich, die Bremskraftsimulationseinheit einseitig mit Sensierungszylinder und anderseitig mit dem Deaktivierungsventil zu verbinden. In letzterem Fall wird die Bremskraftsimulationseinheit einseitig von dem Sensierungszylinder beaufschlagt, sobald der Fahrer das Bremsvorgabeerfassungsmittel betätigt. Gleichzeitig verhindert das

Deaktivierungsventil, dass anderseitig Fluid aus der Brennkraftsimulationseinheit herausgelangen kann. Auf diese Weise kann die Bremskraftsimulationseinheit nicht betätigt werden, sie ist also festgestellt.

Eine Weiterbildung der Erfindung sieht vor, dass ein Druckausgleich des Hydrauliksystems vorgesehen ist. Über den Druckausgleich kann sichergestellt werden, dass sich stets eine ausreichende Menge des Fluids/Hydraulikmediums in dem Bremssystem beziehungsweise dem Hydrauliksystem befindet. Der Druckausgleich kann beispielsweise als Hydraulikbehälter beziehungsweise Bremsflüssigkeitsbehälter vorgesehen sein. Existiert eine Pumpe in dem Hydrauliksystem, so bezieht diese vorteilhafterweise das Hydraulikfluid aus dem Druckausgleich.

Eine Weiterbildung der Erfindung sieht vor, dass der Verstärkerzylinder mechanisch mit dem Sensierungszylinder gekoppelt ist. Es ist also nicht notwendig, dass die Ansteuerung des Verstärkerzylinders allein über das Druckaufbauventil beziehungsweise das Druckabbauventil erfolgt. Es kann ebenso vorgesehen sein, dass der Verstärkerzylinder hydraulisch mit dem Sensierungszylinder gekoppelt ist, sodass eine Betätigung des Bremsvorgabeerfassungsmittels eine Auslenkung des Verstärkerzylinders zur Folge hat. Ebenso kann eine mechanische Verbindung mit dem Sensierungszylinder vorliegen. Diese ist idealerweise zusätzlich zu der hydraulischen Verbindung vorgesehen. Über die mechanische Kopplung des Sensierungszylinders an den Verstärkerzylinder kann erreicht werden, dass auch bei einem Druckverlust in dem Hydrauliksystem eine Betätigung des Bremssystems möglich ist. In diesem Fall wird der Fahrerwunsch mechanisch von dem Sensierungzylinder an den Verstärkerzylinder übertragen, der selbst mechanisch mit dem Bremszylinder wirkverbunden ist. In diesem Fall kann auch bei einem Ausfall des Hydrauliksystems eine Betätigung des Bremszylinders aufgrund des Fahrerwunsches möglich. Dabei ist vorgesehen, dass der Sensierungszylinder nicht sofort nach Betätigen mechanisch mit dem Verstärkerzylinder koppelt, sondern zunächst eine Freilaufstrecke vorgesehen ist, in welcher die Betätigung des Sensierungszylinders keine Auswirkung hat. Diese Freilaufstrecke ist notwendig, um die Verblendfähigkeit des Bremssystems zu gewährleisten.

Eine Weiterbildung der Erfindung sieht vor, dass ein Drucksensor mit dem Sensierungszylinder wirkverbunden ist. Mittels des Drucksensors kann beispielsweise der über das Bremsvorgabeerfassungsmittel erfasste Fahrerwunsch ausgewertet werden. Es wird also der Druck in dem Sensierungszylinder erfasst. Eine Weiterbildung der Erfindung sieht vor, dass der Druckspeicher über ein Entkopplungsventil zur Entkopplung von weiteren Elementen des Hydrauliksystems verfügt. Über das Entkopplungsventil kann der Druckspeicher vollständig verschlossen werden. Auf diese Weise kann der Druck in dem Druckspeicher nicht weiter aufgebaut und auch nicht abgebaut werden. Auf diese Weise kann der Druckverlust in dem Hydrauliksystem durch Undichtigkeiten - beispielsweise der Ventile - minimiert werden. Sobald der Druck in dem Druckspeicher aufgebaut wurde, wird dieser über das Entkopplungsventil entkoppelt, womit nicht in dem ganzen Hydrauliksystem der hohe Druck vorgehalten werden muss. Erst bei Bedarf, also bei Erfassen eines Fahrerwunsches mittels des Bremsvorgabeerfassungsmittels, wird der Druckspeicher wieder in das Hydrauliksystem eingekoppelt, sodass der Verstärkerzylinder hydraulisch betätigt werden kann. Ebenso kann durch ein Verhindern eines weiteren Aufbauen von Druck in dem Druckspeicher verhindert werden, dass Druck in dem System zum Druckaufbau in dem Druckspeicher verlorengeht. Damit kann die Pumpe in sehr kurzer Zeit sehr hohe Drücke in dem Hydrauliksystem aufbauen. Diese Drücke können in dem Verstärkerzylinder aufgebaut werden und somit anschließend über den Bremszylinder eine hohe Bremskraft auf das mindestens eine Rad des Kraftfahrzeugs aufgeprägt werden. Auf diese Weise können in kurzer Zeit sehr hohe Bremskräfte aufgebaut werden, welche beispielsweise für Funktionen zur Überschlagsverhinderung des Kraftfahrzeugs notwendig sein können.

Eine Weiterbildung der Erfindung sieht vor, dass der Bremszylinder mit einer Bremsvorrichtung des Rads in Wirkverbindung steht. Über die Bremsvorrichtung kann bei Betätigung des Bremszylinders die Bremskraft auf das Rad des Kraftfahrzeugs aufgeprägt werden. Die Bremsvorrichtung kann beispielsweise eine Radbremszange mit dazugehörigem Hydraulikzylinder sein.

Eine Weiterbildung der Erfindung sieht vor, dass zwischen dem Bremszylinder und der Bremsvorrichtung mindestens eine Modulationseinheit, insbesondere ABS- oder ESP-Einheit, vorgesehen ist. Der in dem Bremszylinder aufgebaute Druck, der dem Aufprägen der Bremskraft auf das Rad des Kraftfahrzeugs dient (mittels der Bremsvorrichtung), wird somit in die Modulationseinheit geleitet, bevor er die Bremsvorrichtung erreicht. In der Modulationseinheit kann der vorliegende Druck variiert, insbesondere verringert, werden. Solche Maßnahmen werden häufig zur Stabilisierung des Kraftfahrzeugs im Rahmen eines ABS- oder ESP-Systems verwendet. Mittels der Modulationseinheit kann beispielsweise verhindert werden, dass das Rad des Kraftfahrzeugs blockiert, obwohl sich das Kraftfahrzeug in Bewegung befindet, wobei auch einzelne Räder - falls das Kraftfahrzeug über mehrere von dem Bremssystem beeinflusste Räder verfügt - beeinflusst werden können.

Eine Weiterbildung der Erfindung sieht vor, dass das Kraftfahrzeug über einen konventionellen oder über einen Hybrid-Antrieb verfügt. Das Bremssystem kann also gleichermaßen für Kraftfahrzeuge mit konventionellem oder Hybrid-Antrieb verwendet werden.

Die Erfindung umfasst ferner ein Kraftfahrzeug mit einem Bremssystem, welches gemäß den vorhergehenden Ausführungen ausgeführt ist. Das Kraftfahrzeug kann wahlweise mit einem konventionellen oder einem Hybrid-Antrieb ausgerüstet sein. Das Bremssystem des Kraftfahrzeugs kann selbstverständlich nach einzelnen der vorstehend aufgeführten Merkmale weitergebildet sein.

Die Erfindung wird im Folgenden anhand der in der Zeichnung dargestellent Ausführungsbeispiele näher erläutert, ohne dass eine Beschränkung der Erfindung erfolgt. Es zeigen:
Figur 1 ein Bremssystem mit einem zweikreisigen Bremszylinder, welches über ein Deaktivierungsventil zum Feststellen einer Brennkraftsimulationseinheit und ein Verbindungsventil zwischen einem Sensierungszylinder und einem Verstärkerzylinder verfügt,
Figur 2 das aus Figur 1 bekannte Bremssystem, wobei ein Entkopplungsventil zum Entkoppeln eines Druckspeichers vorgesehen ist,
Figur 3 ein alternatives nicht erfindungsgemäßes Bremssystem, wobei sowohl Deaktivierungsventil als auch Verbindungsventil entfallen,
Figur 4 ein alternatives nicht erfindungsgemäßes Bremssystem, wobei das Deaktivierungsventil unmittelbar mit dem Sensierungszylinder wirkverbunden ist,
Figur 5 das bekannte Bremssystem, wobei ein lediglich einkreisiger Bremszylinder vorgesehen ist, und
Figur 6 das bekannte Bremssystem, wobei das Deaktivierungsventil vor der Bremskraftsimulationseinheit angeordnet ist.

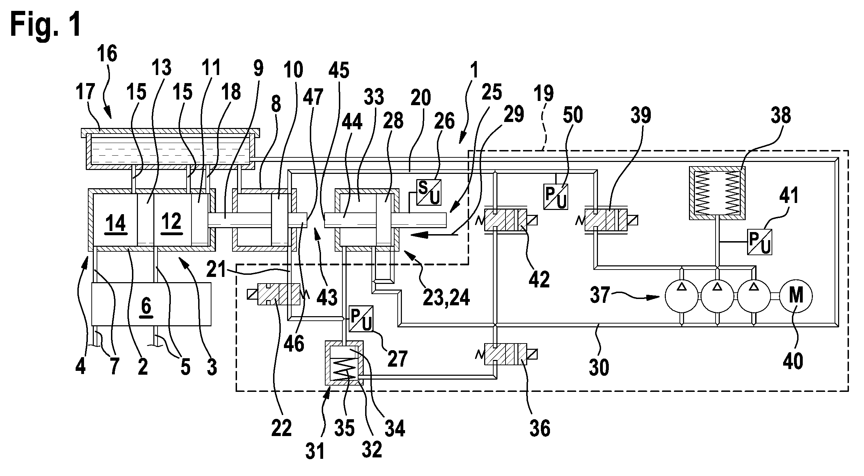

Die Figur 1 zeigt ein Bremssystem 1 mit einem zweikreisigen Bremszylinder 2, der über einen ersten Bremskreis 3 und einem zweiten Bremskreis 4 verfügt. Der erste Bremskreis 3 ist über eine Bremsleitung 5 an eine Modulationseinheit 6 angeschlossen, die den in dem ersten Bremskreis 3 vorliegenden Druck moduliert, beispielsweise im Rahmen eines ABS- oder ESP-Verfahrens. Ausgangsseitig der Modulationseinheit 6 ist der erste Bremskreis 3 mit nicht dargestellten Bremsvorrichtungen verbunden. Die Bremsvorrichtungen des ersten Bremskreises 3 sorgen beispielsweise für das Aufprägen einer Bremskraft auf nicht dargestellte Räder an einer nicht dargestellten Vorderachse eines ebenfalls nicht dargestellten Kraftfahrzeugs, in welchem das Bremssystem 1 vorgesehen ist. Ebenso ist der zweite Bremskreis 4 über eine Bremsleitung 7 mit der Modulationseinheit 6 verbunden, wobei ausgangsseitig der Modulationseinheit 6 Bremsvorrichtungen vorgesehen sind, welche eine Bremskraft auf Räder der Hinterachse des Kraftfahrzeugs aufprägen können. Die Modulationseinheit 6 kann den Druck für einzelne Räder des Kraftfahrzeug modulieren. Das Bremssystem 1 verfügt weiterhin über einen Verstärkerzylinder 8, der mechanisch mit dem Bremszylinder 2 wirkverbunden ist. Zu diesem Zweck ist eine mechanische Verbindung über ein Gestänge 9 vorgesehen, welches einen Kolben 10 des Verstärkerzylinders 8 mit einem Kolben 11 des Bremszylinders 2 verbindet. Bei einer Auslenkung des Kolbens 10 in dem Verstärkerzylinder 8 wird also auch der Kolben 11 in dem Zylinder 2 ausgelenkt. Damit kann bei einer Bewegung des Kolbens 10 in einer Kammer 12 des Bremszylinders 2 ein Druck aufgebaut werden, der über die Bremsleitung 5 in der Modulationseinheit 6 anliegt. Durch den Druck in der Kammer 12 wird ebenfalls ein weiterer Kolben 13 des Bremszylinders 2 bewegt, der dem zweiten Bremskreis 4 zugeordnet ist. Damit wird auch in einer weiteren Kammer 14 Druck aufgebaut und über die Bremsleitung 7 des zweiten Bremskreises 4 der Modulationseinheit 6 zur Verfügung gestellt. Die Kammern 12 und 14 stehen in nicht ausgelenktem Zustand der Kolben 11 und 13 über Leitungen 15 in Fluidverbindung mit einem Druckausgleich 16, der als Bremsflüssigkeitsbehälter 17 ausgebildet ist. Um ein Auslenken des Kolbens 11 zu ermöglichen, ist eine weitere Leitung 18 vorgesehen, welche auf einer der Kammer 12 abgewandten Seite des Kolbens 11 in den Bremszylinder 2 mündet. Auf diese Weise kann Bremsflüssigkeit aus dem Bremsflüssigkeitsbehälter 17 in eine sich durch die Bewegung des Kolbens 11 ausbildenden Kammer gelangen.

Der Verstärkerzylinder 8 wird mittels eines Hydrauliksystems 19 betätigt. Er ist dazu an eine Hochdruckleitung 20 und eine Verbindungsleitung 21 angebunden. Die Verbindungsleitung 21 stellt über ein Verbindungsventil 22 eine Fluidverbindung zwischen dem Verstärkerzylinder 8 und einem Sensierungszylinder 23 her. Der Sensierungszylinder 23 dient als Bremsvorgabeerfassungsmittel 24, erfasst also einen Fahrerwunsch nach einer Bremsaktivität. Der Sensierungszylinder 23 weist eine mechanische Verbindung 25 zu einem nicht dargestellten Bremspedal des Kraftfahrzeugs auf.

An die mechanische Verbindung 25 kann ebenfalls eine Wegsensorik 26 angeschlossen sein, mittels welcher eine Auslenkung des Bremspedals erfassbar ist. Alternativ oder zusätzlich kann die Auslenkung des Sensierungszylinders 23 mittels eines Drucksensors 27 bestimmt werden, der einen sich durch eine Auslenkung eines Kolbens 28 in dem Sensierungszylinder 23 ergebenden Druck misst. Der Drucksensor 27 kann in der Verbindungsleitung 21 vorgesehen sein, vorzugsweise zwischen Verbindungsventil 22 und Sensierungszylinder 23. Mittels der Wegsensorik 26 oder dem Drucksensor 27 kann also eine durch den Pfeil 29 dargestellte Pedalkraft auf das Bremspedal bestimmt werden. Diese Pedalkraft bildet den Fahrerwunsch ab. Um eine Bewegung des Kolbens 28 zu ermöglichen, steht der Sensierungszylinder 23 mit einer Niederdruckleitung 30 in Fluidverbindung.

Das Bremssystem 1 weist weiterhin eine Bremskraftsimulationseinheit 31 auf, die als Bremskraftsimulationszylinder 32 ausgebildet ist. Der Bremskraftsimulationszylinder 32 ist einseitig erfindungsgemäß an die Verbindungsleitung 21 angeschlossen, vorzugsweise ebenso wie der Drucksensor 27 zwischen Verbindungsventil 22 und Sensierungszylinder 23. Bei Betätigung des Sensierungszylinders 23, also Auslenken des Kolbens 28, kann Hydraulikfluid aus einer Kammer 33 des Sensierungszylinders 23 in den Bremskraftsimulationszylinder 32 gedrückt werden. Dadurch kann ein Kolben 34 in dem Bremskraftsimulationszylinder 32 ausgelenkt werden. Dem wirkt eine Feder 35 entgegen. Auf der der Verbindungsleitung 21 abgewandten Seite des Bremskraftsimulationszylinders 32 ist dieser über ein Deaktivierungsventil 36 mit der Niederdruckleitung 30 verbunden. Mittels des Deaktivierungsventils 36 kann der Brennkraftsimulationszylinder 32 festgestellt werden. Bei verschlossenem Deaktivierungsventil 36 kann der Kolben 34 also nicht bewegt werden. Bei geöffnetem Deaktivierungsventil 36 kann mittels der Bremskraftsimulationseinheit 31 die Charakteristik des Bremspedals hinsichtlich Pedalweg/Pedalkraft eingestellt werden. Dabei kann beispielsweise auch der Drucksensor 27 zum Steuern/Regeln der Bremskraftsimulationseinheit 31 verwendet werden. Die Hochdruckleitung 20 wird von einer Pumpe 37 und einem Druckspeicher 38 über ein Druckaufbauventil 39 gespeist. Die an einen Motor 40 angeschlossene Pumpe 37, die beispielsweise als Drei-Kolben-Pumpe ausgebildet ist, fördert Hydraulikfluid aus der Niederdruckleitung 30 in Richtung Hochdruckleitung 20. Ist der Druckspeicher 38 bei arbeitender Pumpe 37 nicht vollständig gefüllt, so wird in diesem Druck aufgebaut und gespeichert. Dies geschieht insbesondere bei geschlossenem Druckaufbauventil 39. Der Druck des von der Pumpe 37 geförderten Fluids beziehungsweise des Druckspeichers 38 wird mittels eines Drucksensors 41 bestimmt. Mit Hilfe des Drucksensors 41 kann die Pumpe 37 beziehungsweise der Motor 40 derart geregelt/gesteuert werden, dass der Fluiddruck nach der Pumpe 37 beziehungsweise in dem Druckspeicher 38 im Wesentlichen konstant bleibt, zumindest solange das Druckaufbauventil 39 geschlossen ist.

Wird das Druckaufbauventil 39 geöffnet, so kann Fluid durch die Hochdruckleitung 20 in den Verstärkerzylinder 8 gelangen, womit der Bremszylinder 2 betätigt und die Bremskraft auf das mindestens eine Rad des Kraftfahrzeugs aufgeprägt ist. Zwischen Hochdruckleitung 20 und Niederdruckleitung 30 ist ein Druckabbauventil 42 angeordnet. Mittels diesem kann der Druck in der Hochdruckleitung 20 beziehungsweise in dem Verstärkerzylinder 8 vermindert werden, sodass die Bremskraft auf das mindestens eine Rad vermindert ist. Die Bremskraft ist also über das Druckaufbauventil 39 und das Druckabbauventil 42 steuerbar beziehungsweise regelbar.

Als Modulationseinheit 6 kommt vorzugsweise ein herkömmliches ESP-Modulationssystem zum Einsatz. Vorteilhaft können auch ein herkömmliches ABS-Modulationssystem oder andere Bremsdruckmodulationssysteme verwendet werden. Der Druck in dem Verstärkerzylinder 8 kann durch Schätzung ermittelt werden, jedoch ist auch eine Druckbestimmung durch eine Sensorik denkbar. Zu diesem Zweck kann ein weiterer Drucksensor vorgesehen sein. Um in dem Verstärkerzylinder 8 Druck aufbauen zu können, muss das Verbindungsventil 22 geschlossen sein. Nach dem Erfassen der Bremskraft mittels der Wegsensorik 26 beziehungsweise des Drucksensors 27 kann der Fahrerwunsch, das heißt der Fahrerbremswunsch, berechnet oder geschätzt werden. Anhand des Fahrerbremswunsches wird mittels des Druckaufbauventils 39 und des Druckabbauventils 22 der Druck in dem Verstärkerzylinder 8 eingestellt.

Die in Figur 1 gezeigten Ventile weisen jeweils eine Rückfallposition auf, die bei einem Fehler in dem Hydrauliksystem 19 - beispielsweise in einem Stromloszustand der Ventile, während welchem diese nicht ansteuerbar sind - eingenommen wird. Das Verbindungsventil 22 ist in diesem Zustand geöffnet, das Deaktivierungsventil 36 geschlossen, das Druckaufbauventil 39 sowie das Druckabbauventil 42 geschlossen. Auf diese Weise kann über die Verbindungsleitung 21 auf hydraulischem Wege die Bremskraft von dem Sensierungszylinder 23 auf den Verstärkerzylinder 8 übertragen werden. Sollte auch dies nicht möglich sein, ist zusätzlich eine mechanische Verbindung 43 vorgesehen. Dabei weist ein an den Kolben 28 angeschlossenes Gestänge 44 einen Stempel 45 und ein an den Kolben 10 angeschlossenes Gestänge 46 einen Stempel 47 auf. Kann die Bremskraft von dem Sensierungszylinder 23 nicht auf hydraulischem Wege durch die Verbindungsleitung 21 in den Verstärkerzylinder 8 übertragen werden, so tritt bei einer bestimmten Auslenkung des Kolbens 28 der Stempel 45 mit dem Stempel 47 in Verbindung, womit der Kolben 10 und damit auch der Kolben 11 auf mechanischem Wege ausgelenkt werden. Das Deaktivierungsventil 36 dient zur Verbesserung des Volumenhaushalts in der Rückfallebene - und insbesondere der Verbesserung des Pedalgefühls, das heißt der Bereitstellung der Bremskraftinformation für den Fahrer -, in diesem Fall. Dies erlaubt für das geschlossene Deaktivierungsventil 36 kürzere Pedalwege. Es ist aber auch möglich, das Deaktivierungsventil 36 beispielsweise aus Kostengünden entfallen zu lassen und auf die Verbesserung des Pedalgefühls zu verzichten. Ein zusätzlicher Drucksensor 50 kann optional vorgesehen sein, um den in der Hochdruckleitung 20 vorliegenden Druck beziehungsweise den Druck nach dem Druckaufbauventil 39 zu bestimmen. Der Drucksensor 50 kann auch in den nachfolgend beschriebenen Ausführungsbeispielen vorgesehen sein.

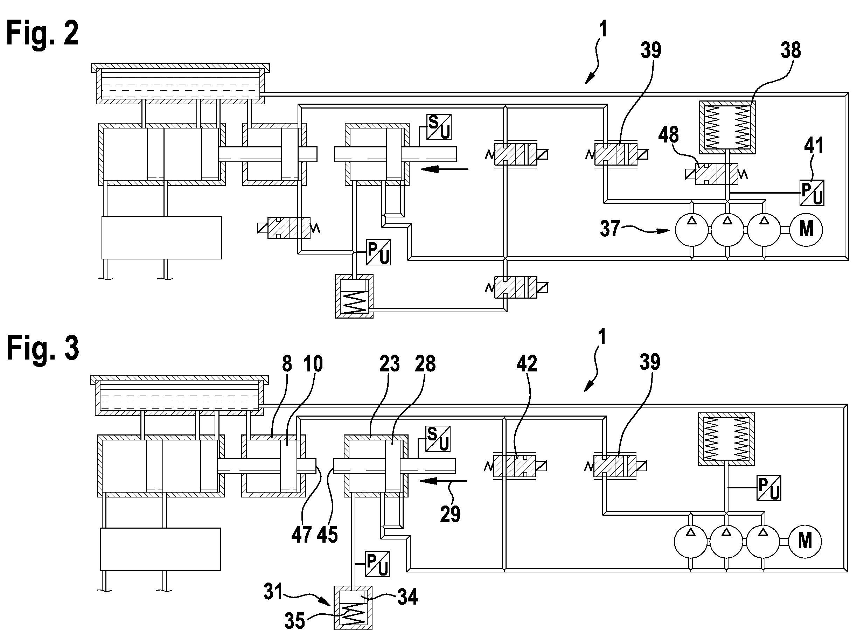

Eine alternative Ausführungsform des aus der Figur 1 bekannten Bremssystems 1 ist in Figur 2 wiedergegeben. Als zusätzliches Element ist hier ein Entkopplungsventil 48 vorgesehen. Dieses kann den Druckspeicher 38 von der Hochdruckleitung 20 entkoppeln. Das bedeutet, dass bei geschlossenem Entkopplungsventil 48 keine Fluidverbindung mehr von dem Druckspeicher 38 zu dem Drucksensor 41, der Pumpe 37 und dem Druckaufbauventil 39 besteht. Durch Schließen des Entkopplungsventils 48 kann die Elastizität des Druckspeichers 38 abgeschaltet werden. Das bedeutet, dass der Druck in dem Druckspeicher 38 nicht weiter durch die Pumpe 37 erhöht wird. Auf diese Weise kann die Pumpe 37 in sehr kurzer Zeit erhöhte Drücke aufbauen. Diese können über das Druckaufbauventil 39 dem Verstärkerzylinder 8 zugeleitet werden und somit der Bremszylinder zur Erzeugung einer großen Bremskraft betätigt werden. Auf diese Weise können in kurzer Zeit sehr große Bremskräfte aufgebaut werden, welche beispielsweise für Funktionen zur Überschlagsverhinderung des Kraftfahrzeugs notwendig sein können. Die Rückfallposition der Ventile entspricht der anhand von Figur 1 beschriebenen. Das Entkopplungsventil 48 nimmt im Fehlerfall eine geöffnete, also fluiddurchlässige, Position ein.

Die Figur 3 zeigt eine nicht erfindungsgemäße Ausführung als Beispiel eines Bremssystems. Hier entfallen im Vergleich zu dem in Figur 1 dargestellten Bremssystem 1 das Verbindungsventil 22 sowie das Deaktivierungsventil 36. Durch den Entfall des Verbindungsventils 22 entfällt die hydraulische Verbindung zwischen Sensierungszylinder 23 und Verstärkerzylinder 8. Falls über Druckaufbauventil 39 und Druckabbauventil 42 kein Druck im Verstärkerzylinder 8 aufgebaut werden kann, sind Sensierungszylinder 23 und Verstärkerzylinder 8 so ausgelegt, dass nach einem definierten Leerweg die beiden Kolben 10 und 28 über die Stempel 45 und 47 mechanisch in Kontakt treten und die Pedalkraft (Pfeil 29) damit mechanisch auf den Bremszylinder 2 wirkt. Durch den Entfall des Deaktivierungsventils 36 kann für diesen Fall die Bremskraftsimulationseinheit 31 nicht abgekoppelt werden. Daher wird das Druckabbauventil 42 vorzugsweise als stromlos offenes Ventil ausgeführt, die Rückfallposition ist also der geöffnete Zustand. Im Gegensatz zu dem in Figur 1 dargestellten Beispiel ist das Ventil im Fehlerfall geöffnet. Die Kraft, die der Fahrer des Kraftfahrzeugs aufbringen muss, um seinen Bremswunsch umzusetzen, erhöht sich um die Kraft, die gegen den durch die Feder 35 beaufschlagten Kolben 34 der Brennkraftsimulationseinheit 31 aufgebracht werden muss. Der Vorteil dieses Ausführungsbeispiels gegenüber dem in Figur 1 dargestellten liegt in der reduzierten Anzahl von Komponenten und den damit erzielbaren geringeren Kosten.

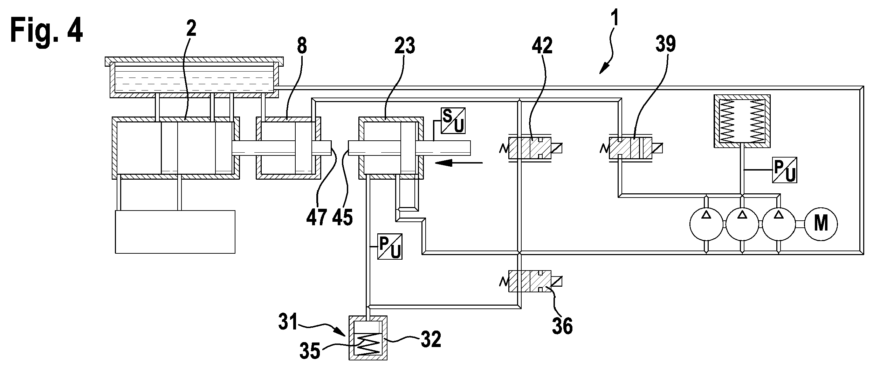

In Figur 4 ist ein nicht erfindungsgemäßes Beispiel eines Bremssystems dargestellt, welches sich gegenüber dem in Figur 1 dargestellten dadurch auszeichnet, dass das Verbindungsventil 22 entfällt und das Deaktivierungsventil 36 in unmittelbarer Fluidverbindung mit dem Sensierungszylinder 23 steht. Das bedeutet, dass das Deaktivierungsventil 36 auf derselben Seite des Bremskraftsimulationszylinders 32 angeschlossen ist, wie der Sensierungszylinder 23. Auf diese Weise entfällt die hydraulische Verbindung zwischen Sensierungszylinder 23 und Verstärkerzylinder 8. Falls über Druckaufbauventil 39 und Druckabbauventil 42 kein Druck im Verstärkerzylinder 8 aufgebaut werden kann, greift der bereits anhand der Figur 3 beschriebene Mechanismus, nämlich dass der Stempel 45 in Kontakt mit dem Stempel 47 tritt und damit eine Betätigung des Bremszylinders 2 bewirkt. Das Druckabbauventil 42 ist ebenso wie in Figur 3 und das Deaktivierungsventil 36 als stromlos offenes Ventil ausgeführt, während das Druckaufbauventil 39 stromlos geschlossen ist. Durch die veränderte Verschaltung des Bremskraftsimulationszylinders 32 kann für den in Figur 4 dargestellten Fall die Bremskraftsimulationseinheit 31 abgekoppelt werden. Die Pedalkraft, die der Fahrer aufbringen muss, um seinen Bremswunsch umzusetzen, erhöht sich somit nicht um die Kraft, die den Kolben im Bremskraftsimulationszylinder 32 entgegen der Feder 35 verschiebt. Ein Vorteil ergibt sich ebenso wie für Figur 3 in der gegenüber in Figur 1 dargestellten Ursprungslösung reduzierten Anzahl von Komponenten und den damit erzielbaren geringeren Kosten.

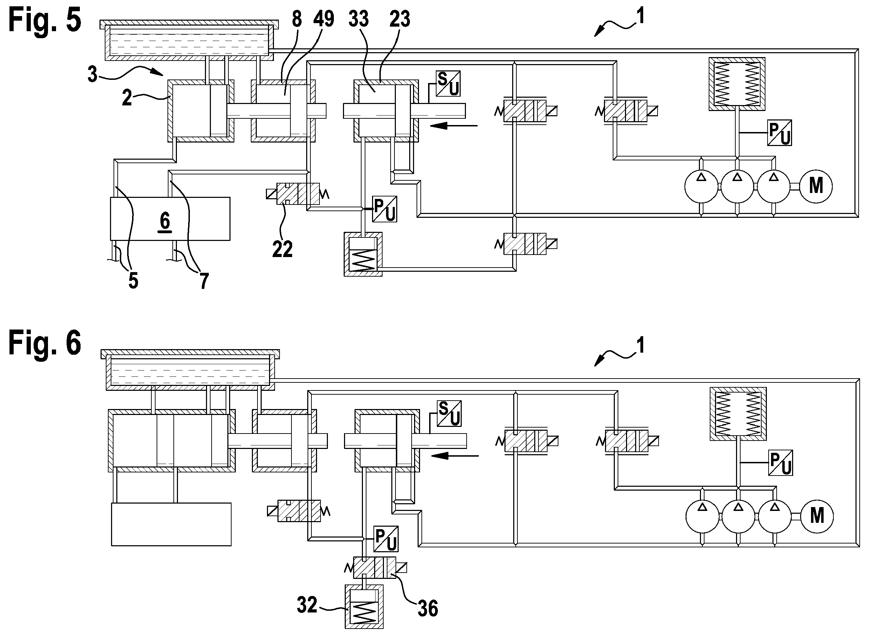

Das Ausführungsbeispiel, welches in Figur 5 gezeigt ist, zeichnet sich dadurch aus, dass ein lediglich einkreisiger Bremszylinder 2 verwendet wird. Der Bremszylinder 2 weist also lediglich den ersten Bremskreis 3 auf. Dieser ist hydraulisch mit der Vorderachse des Kraftfahrzeugs verbunden. Zu diesem Zweck ist der Bremszylinder 2 über die Bremsleitung 5 mit der Modulationseinheit 6 verbunden. Zur Aufprägung der Bremskraft auf die Räder der Hinterachse des Kraftfahrzeugs wird über die Bremsleitung 7 Druck aus dem Verstärkerzylinder 8 verwendet. Dazu ist die Bremsleitung 7 zwischen dem Verstärkerzylinder 8 und dem Verbindungsventil 22 angeschlossen. Die Bremsleitung 7 führt zunächst ebenfalls wie die Bremsleitung 5 in die Modulationseinheit 6 und anschließend zu Bremsvorrichtungen der Räder. Die Rückfallposition im Fehlerfall für die Ventile ist in Figur 5 gleich der in Figur 1 dargestellten. Bei Betätigung des Bremspedals, also des Bremsvorgabeerfassungsmittels 24, wird Volumen aus der Kammer 33 des Sensierungszylinders 23 in eine Kammer 49 des Verstärkerzylinder 8 und zu den Bremsvorrichtungen der Räder der Hinterachse verschoben. Dies ist gewährleistet, da das Verbindungsventil 22 geöffnet ist. Der Bremskraftsimulationszylinder 32 nimmt dabei kein Volumen auf, da er auf der Sekundärseite durch das geschlossene Deaktivierungsventil 36 hydraulisch abgestützt ist.

Es sind noch Fehlerfälle denkbar, bei denen auch mit den vorstehend beschriebenen Rückfallpositionen der Ventile kein Druck aufgebaut werden kann, beispielsweise bei einer Leckage des Bremskraftsimulationszylinders 32. Für diesen Fall ist die Kombination aus Sensierungszylinder 23 und Verstärkerzylinder 8 so ausgelegt, dass nach einem definierten Leerweg die beiden Kolben 44 und 46 auf die beschriebene Weise über die Stempel 45 und 47 mechanisch verbunden sind und die Pedalkraft damit mechanisch auf den Bremszylinder 2 wirkt. Auch hier liegt der Vorteil gegenüber der in Figur 1 dargestellten Lösung in der reduzierten Anzahl von Komponenten und den damit erzielbaren geringeren Kosten. Ein weiterer Vorteil ist in der kürzeren Baulänge durch den Entfall des zweiten Bremskreises 4 zu sehen.

Die Figur 6 zeigt ein weiteres Ausgestaltungbeispiel des aus Figur 1 bekannten Bremssystems 1. Hier ist das Deaktivierungsventil 36 vor der Bremskraftsimulationseinheit angeordnet. Die Rückfallposition der Ventile entspricht der anhand von Figur 1 beschriebenen. Durch diese Variante des Bremssystems 1 können Kosten durch den Wegfall von Bauteilen eingespart werden.

## Patentansprüche

1. Bremssystem (1) für ein Kraftfahrzeug, mit einem wenigstens einkreisigen Bremszylinder (2), mittels welchem bei einer Betätigung eine Bremskraft auf mindestens ein Rad des Kraftfahrzeugs aufprägbar ist, wobei der Bremszylinder (2) mechanisch mit einem von einem Bremsvorgabeerfassungsmittel (24) entkoppelten Verstärkerzylinder (8) wirkverbunden ist, wobei der Verstärkerzylinder (8) hydraulisch zur Betätigung des Bremszylinders (2) entsprechend eines mittels des Bremsvorgabeerfassungsmittels (24) erfassten Fahrerwunsches ansteuerbar ist, und wobei das Bremsvorgabeerfassungsmittel (24) ein mit einem Bremspedal wirkverbundener Sensierungszylinder (23) ist, mittels welchem eine Auslenkung des Bremspedals erfasst wird, **dadurch gekennzeichnet, dass** der Sensierungszylinder (23) zur Rückgabe einer mittels einer Bremskraftsimulationseinheit (31) erzeugten Bremskraftinformation an den Fahrer vorgesehen ist, wobei die Bremskraftsimulationseinheit (31) ein durch eine Feder (35) beaufschlagter Bremskraftsimulationszylinder (32) ist, der an eine Verbindungsleitung (21) angeschlossen ist, die über ein Verbindungsventil (22) eine Fluidverbindung zwischen dem Verstärkerzylinder (8) und dem Sensierungszylinder (23) herstellt.

2. Bremssystem nach Anspruch 1, **gekennzeichnet durch** ein Hydrauliksystem (19), das zur Ansteuerung des Verstärkerzylinders (8) vorgesehen ist.

3. Bremssystem nach Anspruch 2, **dadurch gekennzeichnet, dass** das Hydrauliksystem (19) eine Pumpe (37) zur Erzeugung eines Drucks und/oder einen Druckspeicher (38) zur Speicherung des Drucks und/oder einen Drucksensor (41) zur Bestimmung des Drucks aufweist.

4. Bremssystem nach Anspruch 3, **dadurch gekennzeichnet, dass** zwischen der Pumpe (37) und/oder dem Druckspeicher (38) und dem Verstärkerzylinder (8) ein Druckaufbauventil (39), welches zum Aufbau von Druck in den Verstärkerzylinder (8) schaltbar ist, vorgesehen ist.

5. Bremssystem nach einem der Ansprüche 2 bis 4, **dadurch gekennzeichnet, dass** ein zum Druckabbau in dem Verstärkerzylinder (8) schaltbares Druckabbauventil (42) vorgesehen ist.

6. Bremssystem nach einem der vorhergehenden Ansprüche, **dadurch gekennzeichnet, dass** die Bremskraftsimulationseinheit (31) über ein Deaktivierungsventil (36) zum Feststellen der Bremskraftsimulationseinheit (31) verfügt.

7. Bremssystem nach Anspruch 6, **dadurch gekennzeichnet, dass** das Deaktivierungsventil (36) unmittelbar oder über die Bremskraftsimulationseinheit (31) mit dem Sensierungszylinder (23) wirkverbunden ist.

8. Bremssystem nach Anspruch 2 , **dadurch gekennzeichnet, dass** ein Druckausgleich (16) des Hydrauliksystems (19) vorgesehen ist.

9. Bremssystem nach einem der vorhergehenden Ansprüche, **dadurch gekennzeichnet, dass** der Verstärkerzylinder (8) mechanisch mit dem Sensierungszylinder (23) gekoppelt ist.

10. Bremssystem nach einem der vorhergehenden Ansprüche, **dadurch gekennzeichnet, dass** ein Drucksensor (27) mit dem Sensierungszylinder (23) wirkverbunden ist.

11. Bremssystem nach Anspruch 3, **dadurch gekennzeichnet, dass** das Hydrauliksystem (19) einen Druckspeicher (38) aufweist, wobei der Druckspeicher (38) über ein Entkopplungsventil (48) zur Entkopplung von weiteren Elementen des Hydrauliksystems (19) verfügt.

12. Bremssystem nach einem der vorhergehenden Ansprüche, **dadurch gekennzeichnet, dass** der Bremszylinder (2) mit einer Bremsvorrichtung des Rads in Wirkverbindung steht.

13. Bremssystem nach Anspruch 12, **dadurch gekennzeichnet, dass** zwischen dem Bremszylinder (2) und der Bremsvorrichtung zumindestens eine Modulationseinheit (6), insbesondere ABS- und/oder ESP-Einheit, vorgesehen ist.

14. Kraftfahrzeug mit einem Bremssystem (1) nach einem oder mehreren der vorhergehenden Ansprüche.

15. Kraftfahrzeug nach Anspruch 14, wobei das Kraftfahrzeug über einen konventionellen oder einen Hybrid Antrieb verfügt.

## Claims

1. Brake system (1) for a motor vehicle, having an at least single-circuit brake cylinder (2), by means of which, upon actuation, a brake force can be imparted to at least one wheel of the motor vehicle, the brake cylinder (2) being operatively connected mechanically to a booster cylinder (8) which is decoupled from a brake demand detection means (24), it being possible for the booster cylinder (8) to be actuated hydraulically in order to activate the brake cylinder (2) in accordance with a driver request which is detected by means of the brake demand detection means (24), and the brake demand detection means (24) being a sensing cylinder (23) which is operatively connected to a brake pedal and by means of which a deflection of the brake pedal is detected, **characterized in that** the sensing cylinder (23) is provided for returning a brake force information item which is generated by means of a brake force simulation unit (31) to the driver, the brake force simulation unit (31) being a brake force simulation cylinder (32) which is loaded by way of a spring (35) and is connected to a connecting line (21) which establishes a fluidic connection between the booster cylinder (8) and the sensing cylinder (23) via a connecting valve (22).

2. Brake system according to Claim 1, **characterized by** a hydraulic system (19) which is provided for actuating the booster cylinder (8).

3. Brake system according to Claim 2, **characterized in that**.the hydraulic system (19) has a pump (37) for generating a pressure and/or a pressure accumulator (38) for storing the pressure and/or a pressure sensor (41) for determining the pressure.

4. Brake system according to Claim 3, **characterized in that** a pressure build-up valve (39) which can be switched in order to build up pressure in the booster cylinder (8) is provided between the pump (37) and/or the pressure accumulator (38) and the booster cylinder (8).

5. Brake system according to one of Claims 2 to 4, **characterized in that** a pressure reduction valve (42) which can be switched for reducing the pressure in the booster cylinder (8) is provided.

6. Brake system according to one of the preceding claims, **characterized in that** the brake force simulation unit (31) has a deactivation valve (36) for locking the brake force simulation unit (31).

7. Brake system according to Claim 6, **characterized in that** the deactivation valve (36) is operatively connected directly or via the brake force simulation unit (31) to the sensing cylinder (23).

8. Brake system according to Claim 2, **characterized in that** a pressure equalization (16) of the hydraulic system (19) is provided.

9. Brake system according to one of the preceding claims, **characterized in that** the booster cylinder (8) is coupled mechanically to the sensing cylinder (23).

10. Brake system according to one of the preceding claims, **characterized in that** a pressure sensor (27) is operatively connected to the sensing cylinder (23).

11. Brake system according to Claim 3, **characterized in that** the hydraulic system (19) has a pressure accumulator (38), the pressure accumulator (38) having a decoupling valve (48) for decoupling further elements of the hydraulic system (19).

12. Brake system according to one of the preceding claims, **characterized in that** the brake cylinder (2) is operatively connected to a brake apparatus of the wheel.

13. Brake system according to Claim 12, **characterized in that** at least one modulation unit (6), in particular an ABS and/or ESP unit, is provided between the brake cylinder (2) and the brake apparatus.

14. Motor vehicle having a brake system (1) according to one or more of the preceding claims.

15. Motor vehicle according to Claim 14, the motor vehicle having a conventional or a hybrid drive.

## Revendications

1. Système de freinage (1) pour un véhicule automobile, comprenant au moins un cylindre de frein à un seul circuit (2), au moyen duquel, lors d'un actionnement, une force de freinage peut être exercée sur au moins une roue du véhicule automobile, le cylindre de frein (2) étant en liaison fonctionnelle mécanique avec un cylindre amplificateur (8) désaccouplé d'un moyen de détection de consigne de freinage (24), le cylindre amplificateur (8) pouvant être commandé hydrauliquement pour actionner le cylindre de frein (2) en fonction d'un souhait du conducteur détecté au moyen du moyen de détection de consigne de freinage (24), et le moyen de détection de consigne de freinage (24) étant un cylindre de détection (23) en liaison fonctionnelle avec une pédale de frein, au moyen duquel une déviation de la pédale de frein est détectée, **caractérisé en ce que** le cylindre de détection (23) est prévu pour fournir en retour au conducteur une information de force de freinage produite au moyen d'une unité de simulation de force de freinage (31), l'unité de simulation de force de freinage (31) étant un cylindre de simulation de force de freinage (32) sollicité par un ressort (35) et raccordé à une conduite de liaison (21) qui établit, par le biais d'une soupape de liaison (22), une liaison fluidique entre le cylindre amplificateur (8) et le cylindre de détection (23).

2. Système de freinage selon la revendication 1, **caractérisé par** un système hydraulique (19) qui est prévu pour commander le cylindre amplificateur (8).

3. Système de freinage selon la revendication 2, **caractérisé en ce que** le système hydraulique (19) présente une pompe (37) pour générer une pression et/ou un accumulateur de pression (38) pour accumuler la pression et/ou un capteur de pression (41) pour déterminer la pression.

4. Système de freinage selon la revendication 3, **caractérisé en ce qu'**entre la pompe (37) et/ou l'accumulateur de pression (38) et le cylindre amplificateur (8) est prévue une soupape d'augmentation de pression (39) qui peut être commutée pour augmenter la pression dans le cylindre amplificateur (8).

5. Système de freinage selon l'une quelconque des revendications 2 à 4, **caractérisé en ce qu'**une soupape de diminution de pression (42) pouvant être commutée pour diminuer la pression dans le cylindre amplificateur (8) est prévue.

6. Système de freinage selon l'une quelconque des revendications précédentes, **caractérisé en ce que** l'unité de simulation de force de freinage (31) dispose d'une soupape de désactivation (36) pour fixer l'unité de simulation de force de freinage (31).

7. Système de freinage selon la revendication 6, **caractérisé en ce que** la soupape de désactivation (36) est en liaison fonctionnelle directe ou par le biais de l'unité de simulation de force de freinage (31) avec le cylindre de détection (23).

8. Système de freinage selon la revendication 2, **caractérisé en ce qu'**une compensation de pression (16) du système hydraulique (19) est prévue.

9. Système de freinage selon l'une quelconque des revendications précédentes, **caractérisé en ce que** le cylindre amplificateur (8) est accouplé mécaniquement au cylindre de détection (23).

10. Système de freinage selon l'une quelconque des revendications précédentes, **caractérisé en ce qu'**un capteur de pression (27) est en liaison fonctionnelle avec le cylindre de détection (23).

11. Système de freinage selon la revendication 3, **caractérisé en ce que** le système hydraulique (19) présente un accumulateur de pression (38), l'accumulateur de pression (38) disposant d'une soupape de désaccouplement (48) pour le désaccouplement vis-à-vis d'autres éléments du système hydraulique (19).

12. Système de freinage selon l'une quelconque des revendications précédentes, **caractérisé en ce que** le cylindre de frein (2) est en liaison fonctionnelle avec un dispositif de freinage de la roue.

13. Système de freinage selon la revendication 12, **caractérisé en ce qu'**entre le cylindre de frein (2) et le dispositif de freinage est prévue au moins une unité de modulation (6), en particulier une unité ABS et/ou ESP.

14. Véhicule automobile comprenant un système de freinage (1) selon l'une quelconque ou plusieurs des revendications précédentes.

15. Véhicule automobile selon la revendication 14, dans lequel le véhicule automobile dispose d'un entraînement conventionnel ou d'un entraînement hybride.
